# EUROPEAN PATENT APPLICATION

(11) **EP 3 470 445 A1**
(43) Date of publication of application: **17.04.2019**
(21) Application number: 17812945.8
(22) Date of filing: 10.03.2017
(51) Int. Cl.: C08G 18/08, C08G 18/32

(54) **ALDEHYDE SCAVENGER FOR POLYURETHANES, POLYURETHANE AND METHOD FOR PRODUCING POLYURETHANE**

(30) Priority: 14.06.2016 JP 2016118168
(71) Applicant: Bridgestone Corporation, Tokyo 104-8340 (JP)
(72) Inventor: SEGUCHI Hideharu, Tokyo 104-8340 (JP); NISHIKITA Naoko, Tokyo 104-8340 (JP)
(74) Representative: Oxley, Robin John George
(86) International application number: PCT/JP2017/009709
(87) International publication number: WO 2017/217039

(57) **Abstract**

The present invention provides an aldehyde scavenger for polyurethanes, in which a reducing agent is dissolved in an amine compound having two or more active hydrogen groups. In addition, in the present invention, the reducing agent is preferably a complex metal hydride, more preferably sodium borohydride, and the amine compound having two or more active hydrogen groups is preferably an alkanolamine having a secondary amino group.

## Description

### [Technical Field]

The present invention relates to an aldehyde scavenger for polyurethanes, a polyurethane, and a method for producing a polyurethane.

Priority is claimed on Japanese Patent Application No. 2016-118168, filed June 14, 2016, the content of which is incorporated herein by reference.

### [Background Art]

Aldehydes (formaldehyde and the like), which are one type of volatile organic compounds (VOC), cause sick building syndrome and the like, and therefore recent years have seen demands to diffuse these compounds as much as possible in the residential field. Such a situation is the same in an interior of a vehicle such as an automobile, and measures against VOCs have become necessary.

For example, a flexible urethane foam with a high degree of cushioning has been used for a seat pad of a vehicle seat. If these urethane foams contain aldehydes contained in ingredients for the urethane foam, and aldehydes generated at the time of a urethanization reaction, the aldehydes diffuse from the pad, and therefore reduction of the generation of these aldehydes has been demanded.

As a technique for reducing the generation of aldehydes, adding sodium borohydride (NaBH₄) as a reducing agent to an aqueous solution of a catalyst is known in the related art (refer to Patent Document 1). In addition, because solid sodium borohydride does not dissolve in a polyol as it is, it is used in a state of an aqueous solution in Patent Document 1 and the like.

### [Citation List]

### [Patent Document]

[Patent Document 1]
Japanese Unexamined Patent Application, First Publication No. 2005-154599

### [Summary of Invention]

### [Technical Problem]

However, sodium borohydride is originally a water prohibited substance of class 3 of hazardous materials (in the Japanese Fire Service Act), and therefore, is not stable in the state of an aqueous solution. When sodium borohydride dissolves in water as in Patent Document 1, an aldehyde reduction activity is promptly lost, making storage stability extremely poor. Furthermore, there is a problem that physical properties of the obtained urethane deteriorate in an aqueous solution of a reducing agent in which sodium hydroxide and the like is dissolved to be stabilized under alkaline conditions. Therefore, it is difficult to apply sodium borohydride as a reducing agent to production of a polyurethane on an industrial scale.

An object of the present invention is to provide an aldehyde scavenger for polyurethanes which is excellent in storage stability and can exhibit an excellent effect of reducing aldehydes without causing deterioration in physical properties of polyurethanes; a polyurethane formed of the aldehyde scavenger; and a production method of a polyurethane.

### [Solution to Problem]

[1] An aldehyde scavenger for polyurethanes, in which a reducing agent is dissolved in an amine compound having two or more active hydrogen groups.
[2] The aldehyde scavenger for polyurethanes according to [1], in which the reducing agent is a complex metal hydride.
[3] The aldehyde scavenger for polyurethanes according to [2], in which the complex metal hydride is sodium borohydride.
[4] The aldehyde scavenger for polyurethanes according to any one of [1]
   to [3], in which the amine compound having two or more active hydrogen groups is an alkanolamine having a secondary amino group.
[5] A polyurethane which is obtained by reacting a polyol composition that contains a polyol, a catalyst, and the aldehyde scavenger for polyurethanes according to any one of [1] to [4], with a polyisocyanate.
[6] The polyurethane according to [5], in which an amount of the reducing agent contained in the aldehyde scavenger for polyurethanes is from 0.0010 to 0.0100 parts by mass with respect to 100 parts by mass of the polyol.
[7] The polyurethane according to [5] or [6], which is a seat pad for vehicles.
[8] A method for producing a polyurethane, including: obtaining a polyol composition by mixing a polyol, a catalyst, and the aldehyde scavenger for polyurethanes according to any one of [1] to [4]; and reacting the obtained polyol composition with a polyisocyanate.
[9] The method for producing a polyurethane according to [8], in which an amount of the reducing agent contained in the aldehyde scavenger for polyurethanes is from 0.0010 to 0.0100 parts by mass with respect to 100 parts by mass of the polyol.
[10] A polyurethane containing: a constitutional unit derived from an amine compound having two or more active hydrogen groups; and 5 to 100 ppm a boron hydride compound, in which a generation amount of acetaldehyde measured by a method according to JASO M902:2007 is 0.6 µg/piece or less.
[11] The polyurethane according to [10], in which a wet heat compression set measured according to Japanese Industrial Standard JIS K 6400 is 30% or less.

### [Effects of Invention]

The aldehyde scavenger for polyurethanes of the present invention is excellent in storage stability and can exhibit an excellent effect of reducing aldehydes without causing deterioration in physical properties of polyurethanes.

### [Description of Embodiments]

Hereinafter, preferred embodiments of the present invention will be explained, but the present invention is not limited to such embodiments.

### <<Aldehyde scavenger for polyurethanes>>

In the aldehyde scavenger for polyurethanes of the present invention, a reducing agent is dissolved in an amine compound having two or more active hydrogen groups. In addition, it is preferable that the reducing agent be substantially completely dissolved in the amine compound, that is, that there be no visually observable undissolved solid matter.

### <Reducing agent>

The reducing agent is not particularly limited as long as the reducing agent can reduce aldehydes such as formaldehyde and acetaldehyde. As the reducing agent, a complex metal hydride (Complex Metal Hydride) is preferably used. Specific examples of the complex metal hydride include sodium borohydride (NaBH₄), lithium aluminum hydride (LiAlH₄), lithium borohydride (LiBH₄), sodium cyanotrihydroborate (NaBH₃CN), and the like. In addition, examples of reducing agents other than complex metal hydrides include sodium thiosulfate (Na₂S₂O₃), sodium sulfite (Na₂SO₃), borane (BH₃, B₂H₆), and the like. Among these, sodium borohydride is preferable from the viewpoint of a balance between availability, aldehyde reduction activity, and handling convenience.

Furthermore, each of the above-described reducing agents may be used alone, or two or more kinds thereof may be used in combination.

An amount of the reducing agent is not particularly limited as long as the amount is an amount capable of obtaining a sufficient effect of reducing aldehydes. As will be described later, the amount can be appropriately determined in consideration of an amount of a polyol used for producing a polyurethane, but the amount is preferably from 0.0010 to 0.0100 parts by mass, more preferably from 0.0015 to 0.0090 parts by mass, and even more preferably from 0.0020 to 0.0080 parts by mass, with respect to 100 parts by mass of the polyol. If the amount of the reducing agent is equal to or higher than the lower limit described above, a sufficient effect of reducing aldehydes is easily obtained. In addition, if the amount of the reducing agent is equal to or lower than the upper limit described above, there is no risk of deterioration in physical properties of the polyurethane being caused.

### <Amine compound having two or more active hydrogen groups>

In the present specification, the term "active hydrogen group" means an isocyanate-reactive group, which means a hydroxyl group, an amino group, a carboxyl group, and the like.

The amine compound having two or more active hydrogen groups is preferably an alkanolamine, and more preferably an alkanolamine having a secondary amino group, from the viewpoint of achieving the excellent effect of reducing aldehydes without causing deterioration in the physical properties of the polyurethane.

Specific examples of the amine compound having two or more active hydrogen groups include primary amines such as ethylenediamine, xylylenediamine, and methylenebisorthochloroaniline, secondary amines such as diethanolamine and diisopropanolamine, and tertiary amines such as triethanolamine, N-methyl diethanolamine, N-phenyl diethanolamine, and the like. Among these, diethanolamine, diisopropanolamine, triethanolamine, and N-methyl diethanolamine, which are alkanolamines, are preferable, and diethanolamine which is an alkanolamine having a secondary amino group is particularly preferable.

### <Other components>

The aldehyde scavenger for polyurethanes of the present invention may contain components other than the above described components within a range not impairing the effect of the present invention. Examples of other components include a basic substance such as sodium hydroxide. A content of the other components in the aldehyde scavenger is preferably 0.01% to 50% by mass, more preferably 0.1% to 10% by mass, and even more preferably 0.5% to 5% by mass.

### <<Polyurethane (1)>>

The polyurethane of the present invention is a polyurethane which is obtained by reacting a polyol composition that contains a polyol, a catalyst, and the aldehyde scavenger for polyurethanes with a polyisocyanate.

An aspect of the polyurethane of the present invention is not particularly limited, but a flexible polyurethane foam or a semi-rigid polyurethane foam is preferable, and the flexible polyurethane foam is particularly preferable. Hereinafter, the flexible polyurethane foam will be described.

The flexible polyurethane foam is obtained by foam molding the polyol composition containing the polyol, a foaming agent, and the catalyst, and the polyisocyanate. As a method for foam molding, for example, a one-shot method, a prepolymer method, a mechanical froth method, or the like can be adopted.

The method for foam molding the polyurethane foam may be any one of a foam molding method using a method in which a mixture of a polyol composition and polyisocyanate is discharged onto a traveling conveyor belt, foaming is carried out while moving on the conveyor belt, and therefore a continuous polyurethane foam slab is obtained; a mold method in which the mixture is discharged into a mold and foaming is carried out in the mold; or a mechanical froth method in which bubbles are mixed by mechanical stirring.

### <Polyol composition>

### (Polyol)

A polyol component contained in the polyol composition contains a polyether polyol in which an average number of functional groups is 2 to 8, a hydroxyl number is 14 to 60 (mg KOH/g), and a content of oxyethylene units is 0% to 30% by weight (hereinafter referred to as "polyether polyol A"), from the viewpoint of moldability and mechanical properties of the polyurethane.

The average number of functional groups of the polyether polyol A is 2 to 8 and is preferably 2 to 6 and more preferably 2 to 5 from the viewpoint of the moldability and mechanical properties of the polyurethane.

The hydroxyl number of the polyether polyol A is 14 to 60 (mg KOH/g), preferably 17 to 50 (mg KOH/g), and more preferably 20 to 45 (mg KOH/g), from the viewpoint of curability and mechanical properties of the polyurethane.

The hydroxyl number in the present invention is measured by a method specified in Japanese Industrial Standard JIS K 1557-1.

A content of the oxyethylene unit of the polyether polyol A is 0% to 30% by weight, preferably 5% to 25% by weight, and more preferably 5% to 20% by weight, from the viewpoint of the moldability and mechanical properties of the polyurethane.

The polyether polyol contained in the polyol composition may be one more kinds.

Examples of the polyether polyol A include a compound having a structure to which an alkylene oxide (hereinafter abbreviated as AO) is added to a compound (polyhydric alcohol, polyhydric phenol, amine, polycarboxylic acid, phosphoric acid, and the like) containing at least 2 (preferably 2 to 8) active hydrogens. Any of these may be used as long as it is a compound that can be used for general production of a polyurethane foam. Among them, polyhydric alcohols are preferable from the viewpoint of the curability and mechanical properties of the polyurethane.

The AO to be added to the active hydrogen-containing compound is preferably an AO composed of a 1,2-AO having 3 or more carbon atoms and ethylene oxide (hereinafter abbreviated as EO). Examples of the 1,2-AO having 3 or more carbon atoms include 1,2-propylene oxide (hereinafter abbreviated as PO), 1,2-butylene oxide, styrene oxide, and the like, among which PO is preferable from the viewpoint of productivity.

The AO is preferably composed only of EO and a 1,2-AO having 3 or more carbon atoms but may be an adduct in which another AO is used in combination with the AO, in a range of 10% by weight or less (more preferably 5% by weight or less). As the other AO, an AO having 4 to 8 carbon atoms is preferable, and examples of the other AO include 1,3-, 1,4-, and 2,3-butylene oxide, and the like. Two or more kinds thereof may be used.

As a method for adding the AO, any one of block addition or random addition may be used, but it is preferable that at least an active hydrogen terminal of the polyol be block added.

In the present invention, the polyol component may contain another polyol or an active hydrogen component in addition to the polyol. Examples thereof include polyether polyols, polyester polyols, and polyhydric alcohols in addition to the components described above, polyols and mono-ols in addition to the components described above, polymer polyols obtained by polymerizing vinyl monomers in these polyols, amines, a mixture thereof, and the like. Any of these may be used as long as it is a component that can be used for general production of a polyurethane.

In addition, the polyol composition may further contain polyols functioning as a communication agent for communicating bubbles of the flexible polyurethane foam. Any one of these may be used as long as it is a component that can be used for general production of a polyurethane.

### (Foaming agent)

The foaming agent may be contained in the polyol composition, and water is preferably used as the foaming agent. Water reacts with polyisocyanate to generate carbon dioxide gas, and thus functions as the foaming agent.

A content of water in the polyol composition is preferably from 1 to 7 parts by mass, and more preferably from 2 to 5 parts by mass, with respect to 100 parts by mass of the polyol in the polyol composition. With the content within the above range, the flexible urethane foam having desired physical properties can be easily obtained. In addition, it is possible to prevent deterioration of a characteristic of wet heat compression set of the obtained flexible urethane foam.

### (Catalyst)

Examples of the catalyst contained in the polyol composition include known catalysts used in the field of polyurethanes. Examples of the known catalysts include amine catalysts and tin catalysts.

In general, the known catalysts are roughly divided into gelling catalysts and blowing catalysts.

Gelling catalysts promote the synthesis of a polyurethane by the reaction of a polyol and a polyisocyanate. A catalyst in which a rate of a foam catalytic constant to a gelation catalytic constant (foam catalytic constant/gelation catalytic constant) is 1 or less is called a gelling catalyst.

Blowing catalysts promote foaming of a polyurethane more than gelling. A catalyst in which a rate of the foam catalytic constant to the gelation catalytic constant exceeds 1 is called a blowing catalyst.

The gelation catalytic constant is a constant that determines a speed of the gelling reaction between polyols and polyisocyanates, and as the value thereof increases, a crosslink density of a foam body increases. Specifically, a reaction constant of the gelation reaction of tolylene diisocyanate and diethylene glycol is used. Meanwhile, the foam catalytic constant is a constant that determines a speed of the foaming reaction between polyisocyanates and water, and as the value thereof increases, communicability of cells of a foam body increases. Specifically, a reaction constant of the foaming reaction of tolylene diisocyanate and water is used.

The gelation catalytic constant and the foam catalytic constant are determined by known methods.

In the present invention, it is preferable to use a catalyst containing both a gelling catalyst and a blowing catalyst. By using such a catalyst, the mechanical strength of the flexible urethane foam can be improved.

Examples of the gelling catalysts include tertiary amines such as triethylenediamine (TEDA), N,N,N' ,N' -tetramethylethylenediamine, N,N,N',N'-tetramethylpropylenediamine, N,N,N',N",N"-pentamethyl-(3-aminopropyl) ethylenediamine, N,N,N',N",N"-pentamethyldipropylenetriamine, N,N,N' ,N' -tetramethylguanidine, and 135-tris(N,N-dimethylaminopropyl)hexahydro-S-triazine; imidazoles such as 1-methylimidazole, 1,2-dimethylimidazole, and 1-isobutyl-2-methylimidazole; N,N,N',N'-tetramethylhexamethylenediamine, N-methyl-N'-(2-dimethylaminoethyl) piperazine, N,N'-dimethylpiperazine, N-methylpiperazine, N-methylmorpholine, N-ethyl morpholine; 1 ,8-diazabicyclo [5.4.0]undecene-7,1,1'-(3-(dimethylamino)propyl)imino)bis(2-propanol) ; and the like.

Examples of the blowing catalysts include bis(2-dimethylaminoethyl)ether, N,N,N',N",N"-pentamethyldiethylenetriamine, N,N,N',N",N"',N"'-hexamethyltriethylenetetramine, and the like.

Furthermore, examples of the gelling catalyst include, as a tin catalyst, known organic tin catalysts such as stannous octoate, stannous laurate, dibutyltin dilaurate, dibutyltin dimaleate, dibutyltin diacetate, diacetate dioctyltin, tin octylate, and the like, in addition to the amine catalyst described above. Any of the gelling catalyst and the blowing catalyst may be used in the form of a solution obtained by dilution with a known solvent such as dipropylene glycol or polypropylene glycol.

A content of the amine catalyst in the polyol composition is preferably 0.1 to 5.0 parts by mass, more preferably 0.2 to 3.0 parts by mass, and even more preferably from 0.3 to 2.0 parts by mass with respect to 100 parts by mass of the polyol in the polyol composition.

A content of the tin catalyst in the polyol composition is preferably 0.001 to 1 parts by mass with respect to 100 parts by mass of the polyol in the polyol composition.

### (Foam stabilizer)

The polyol composition may contain a foam stabilizer. As the foam stabilizer, a known foam stabilizer used in the field of polyurethane foams can be applied, and examples thereof include a silicone foam stabilizer and the like.

A content of the foam stabilizer in the polyol composition is preferably 0.1 to 5 parts by mass, more preferably 0.2 to 3 parts by mass, and even more preferably from 0.3 to 2.5 parts by mass with respect to 100 parts by mass of the polyol in the polyol composition.

### (Aldehyde scavenger for polyurethanes)

The aldehyde scavenger for polyurethanes contained in the polyol composition is as described above. In addition, an amount of the aldehyde scavenger for polyurethanes is not particularly limited as long as it is an amount capable of obtaining a sufficient effect of reducing aldehydes, but the amount of the aldehyde scavenger is preferably an amount such that an amount of the reducing agent contained in the aldehyde scavenger for polyurethanes becomes an amount from 0.0010 to 0.0100 parts by mass, the amount of the aldehyde scavenger is more preferably an amount such that the amount of the reducing agent becomes an amount from 0.0015 to 0.0090 parts by mass, and the amount of the aldehyde scavenger is even more preferably an amount such that the amount of the reducing agent becomes an amount from 0.0020 to 0.0080 parts by mass, with respect to 100 parts by mass of the polyol in the polyol composition used for the production of a polyurethane. If the amount of the reducing agent is equal to or higher than the lower limit described above, a sufficient effect of reducing aldehydes is easily obtained. In addition, if the amount of the reducing agent is equal to or lower than the upper limit described above, there is no risk of deterioration in physical properties of the polyurethane being caused.

### (Other additional components)

Various additives can be mixed in the polyol composition as necessary. For example, as necessary, an alkaline substance such as sodium hydroxide (NaOH) may be added for further improvement of the storage stability. However, when an excessive amount of the alkaline substance is added, there is a risk of the physical properties of the polyurethane deteriorating. Therefore, the amount thereof is preferably 0.0200 parts by weight or less, more preferably 0.0150 parts by weight or less, and even more preferably 0.0100 parts by weight or less with respect to 100 parts by mass of the polyol in the polyol composition.

As a component other than the alkaline substance, for example, a coloring agent such as a crosslinking agent and a pigment, a chain extender, a filler such as calcium carbonate, a flame retardant, an antioxidant, an ultraviolet absorbent, a light stabilizer, a conductive substance such as carbon black, an antibacterial agent, and the like can be mixed. A mixing amount of various additives is appropriately adjusted according to the application and purpose.

### <Polyisocyanate>

As the isocyanate component used in the method for producing the flexible polyurethane foam of the present invention, those used for polyurethane production in the related art can be used. Examples of such isocyanates include aromatic polyisocyanates, aliphatic polyisocyanates, alicyclic polyisocyanates, araliphatic polyisocyanates, modified products thereof (for example, a urethane group-, carbodiimide group-, allophanate group-, urea group-, biuret group-, isocyanurate group-, or oxazolidone group-containing modified product, and the like), and a mixture of two or more of these.

Examples of the aromatic polyisocyanate include aromatic diisocyanates having 6 to 16 carbon atoms (excluding carbons in the NCO group; the same applies to the following isocyanates), aromatic triisocyanates having 6 to 20 carbon atoms, a crude product of these isocyanates, and the like. Specific examples thereof include 1,3- and/or 1,4-phenylene diisocyanate, 2,4- and/or 2,6-toluene diisocyanate (TDI), crude TDI, 2,4'- and/or 4,4'-diphenylmethane diisocyanate (MDI), polymethylene polyphenyl isocyanate (crude MDI), and the like.

Examples of the aliphatic polyisocyanate include aliphatic diisocyanates having 6 to 10 carbon atoms, and the like. Specific examples thereof include 1,6-hexamethylene diisocyanate, lysine diisocyanate, and the like.

Examples of the alicyclic polyisocyanate include alicyclic diisocyanates having 6 to 16 carbon atoms, and the like. Specific examples thereof include isophorone diisocyanate, 4,4'-dicyclohexylmethane diisocyanate, norbornane diisocyanate, and the like. Examples of the araliphatic polyisocyanate include araliphatic diisocyanates having 8 to 12 carbon atoms, and the like. Specific examples thereof include xylylene diisocyanate, α,α,α',α'-tetramethylxylylene diisocyanate, and the like.

Specific examples of the modified polyisocyanate include urethane modified MDI, carbodiimide modified MDI, and the like.

In preparation of the polyol composition, each component may be mixed by a known method. Thereafter, the polyol composition and the polyisocyanate are mixed to obtain a foaming ingredient, and by foam molding the ingredient, the flexible polyurethane foam can be produced.

A specific application of the polyurethane of the present invention is not particularly limited. For example, in a case where the polyurethane of the present invention is the flexible urethane foam, the polyurethane can be suitably used for various molded articles, such as a seat pad of an automobile or transport vehicle, bedclothes such as mattresses and pillows, women's undergarments such as brassieres and brassiere pads, and furthermore, a cover for chair or sofa legs, an underlay of a dish, a flooring material, a table sheet, a coaster, other miscellaneous goods for preventing damage and the like. The polyurethane can be particularly suitably used as a seat pad of an automobile or a transport vehicle.

### <<Polyurethane (2)>>

In addition, according to another aspect of the present invention, there is provided a polyurethane having the following characteristics.
(1) A polyurethane containing: a constitutional unit derived from an amine compound having two or more active hydrogen groups; and
(2) 5 to 100 ppm a boron hydride compound,
(3) in which a generation amount of acetaldehyde measured by a method according to JASO M902:2007 is 0.6 µg/sample or less.

The term "constitutional unit" means a unit derived from a monomer formed by polymerization of the "amine compound having two or more active hydrogen groups" as the monomer. This constitutional unit is generally a constitutional unit in which the amine compound having two or more active hydrogen groups contained in the aldehyde scavenger for polyurethanes is incorporated into a polymer chain of a urethane polymer.

Therefore, the amine compound having two or more active hydrogen groups for obtaining the constitutional unit of the polyurethane of the present embodiment is the same as that described above.

In addition, an amount of the constitutional unit in the polyurethane of the present embodiment is generally an amount corresponding to the amount of the amine compound contained in the aldehyde scavenger for polyurethanes. Therefore, the amount of the constitutional unit is not particularly limited as long as it is an amount such that the aldehyde scavenger can exhibit the functions thereof. The amount thereof is usually 0.01% to 2.0%, is preferably 0.02% to 1.5%, and more preferably 0.05% to 1.0% with respect to the weight of the polyurethane.

The boron hydride compound contained in the polyurethane of the present embodiment includes a boric acid B (OH)₃ which is generated by reduction of aldehydes and the like by the sodium borohydride and the sodium borohydride (NaBH4) used as the reducing agent as described above, and oxidation by itself.

An amount of the boron hydride compound is preferably 5 to 100 ppm, more preferably 10 to 90 ppm, and particularly preferably 20 to 80 ppm.

An amount of the above-described boron hydride compound can be measured as a boron concentration by 1CP optical emission spectrometry.

In addition, in the polyurethane of the present embodiment, a generation amount of acetaldehyde measured by a method according to JASO M902:2007 is preferably 0.6 µg/piece or less, and more preferably 0.5 µg/piece or less. Details of the measurement method will be described later.

In addition, in the polyurethane of the present embodiment, a wet heat compression set measured according to Japanese Industrial Standard JIS K 6400 is preferably 30% or less, more preferably 25% or less, and even more preferably 20% or less.

The method for producing the polyurethane of the present embodiment is not particularly limited as long as the above requirements are satisfied, but, for example, the production can be performed by the method for producing the above-described polyurethane (1) according to the present invention.

### [Examples]

Next, the present invention will be explained in more detail with reference to examples, but the present invention is not limited by these examples.

### [Reference Example] (Control)

According to a combination shown in Table 1, a mixed solution containing a component other than a polyisocyanate (polyol composition for polyurethane production) was mixed with a polyisocyanate, and therefore a foaming stock solution was prepared (in the table, the unit of an amount of ingredients is parts by mass unless otherwise specified). In this case, a solution temperature of the polyurethane foaming stock solution was set to 25°C. Next, immediately after preparation of the above stock solution, the solution was foamed and cured in a mold at a set temperature of 60°C, the resultant product was demolded, and therefore a urethane foam for a seat pad was obtained. This foaming stock solution was poured into the mold to perform foam molding, and therefore a seat pad was produced. The performance of the obtained seat pad was evaluated by a measurement method that will be described later. The results are shown in Table 2.

**[Table 1]**

| Compound | Compounding ratio (parts by mass) |
|---|---|
| Polyether polyol | 70 |
| Polymer polyol | 30 |
| Gelling catalyst | 0.4 |
| Blowing catalysts | 0.1 |
| Foam Stabilizer | 1.0 |
| Aldehyde scavenger | According to Table 2 |
| Water | 3.8 |
| Polyisocyanate | 45 |

Details of the ingredients in Table 1 are as follows.

Polyether polyol: A polyether polyol having a hydroxyl number of 34 which is the polyether polyol A (SANNIX FA-703, manufactured by Sanyo Chemical Industries, Ltd.)
Polymer polyol: A polymer polyol having a hydroxyl number of 23 (SANNIX KC-855, manufactured by Sanyo Chemical Industries, Ltd.)
Gelling catalyst: A mixture of triethylenediamine (TEDA) (33% by mass) and dipropylene glycol (DPG) (67% by mass) (TEDA-L33, manufactured by TOSOH CORPORATION)
Blowing catalyst: A mixture of bis(2-dimethylaminoethyl)ether (BDMAEE) (70% by mass) and dipropylene glycol (DPG) (30% by mass) (TOYOCAT-ET, manufactured by TOSOH CORPORATION)
Foam stabilizer: A silicone foam stabilizer (Niax silicone L-3627, manufactured by Momentive Performance Materials Inc.)
Polyisocyanate: A mixture of TDI (80% by mass) and MDI (20% by mass), NCO = 44.8% (COSMONATE TM-20, manufactured by Mitsui Chemicals & SKC Polyurethanes)

### [Examples 1 to 6 and Comparative Examples 1 to 12]

Urethane foams for a seat pad for were obtained in the same manner as in the reference example except that the aldehyde scavenger shown in Table 2 was added to the polyol composition. The performance of the obtained seat pad was evaluated by a measurement method that will be described later. The results are shown in Table 2.

**[Table 2]**

| | Aldehyde scavenger | State | Addition amount (parts by mass) | NaOH concentration in aldehyde scavenger (wt%) | Content of SBH in polyol composition Parts by mass | Foam density (kg/m³) | Formaldehyde (µg/piece) | Acetaldehyde (µg/piece) | WET SET (%) |
|---|---|---|---|---|---|---|---|---|---|
| Reference example | None | - | 0 | - | 0 | 45 | 0.7 | 0.9 | 22.6 |
| Example 1 | A | Liquid | 0.15 | - | 0.0030 | 45 | 0.3 | 0.5 | 22.4 |
| Example 2 | B | Liquid | 0.15 | 4.0 | 0.0030 | 45 | 0.2 | 0.5 | 23.3 |
| Comparative Example 1 | C | Liquid | 4.2 | - | 0.0030 | 45 | 0.3 | 0.5 | 22.8 |
| Comparative Example 2 | D | Liquid | 3.0 | - | 0.0030 | Not moldable | | | |
| Comparative Example 3 | D | Liquid | 0.5 | - | 0.0005 | 44 | 0.5 | 1.0 | 23.5 |
| Comparative Example 4 | E | Liquid | 3.0 | - | 0.0030 | 45 | 0.4 | 0.6 | 32.8 |
| Comparative Example 5 | F | Liquid | 0.025 | 40 | 0.0030 | 45 | 0.3 | 0.5 | 29.7 |
| Comparative Example 6 | G | Liquid | 0.15 | - | 0.0030 | 45 | 0.3 | 0.5 | 22.9 |
| Comparative Example 7 | H | Solid | 0.003 | - | 0.0030 | 45 | 0.6 | 0.8 | 23.5 |
| Example 3 | A1 | Liquid | 0.15 | - | 0.0030 | 46 | 0.4 | 0.6 | 22.7 |
| Example 4 | B1 | Liquid | 0.15 | 4.0 | 0.0030 | 45 | 0.3 | 0.5 | 23.4 |
| Example 5 | A1 | Liquid | 0.35 | - | 0.0070 | 45 | 0.1 | 0.4 | 24.8 |
| Example 6 | A1 | Liquid | 0.50 | - | 0.0100 | 45 | 0.1 | 0.3 | 29.4 |
| Comparative Example 8 | C1 | Liquid | 4.2 | - | 0.0030 | 45 | 0.9 | 1.1 | 22.6 |
| Comparative Example 9 | D1 | Liquid | 0.5 | - | 0.0005 | 45 | 0.8 | 1.0 | 23.1 |
| Comparative Example 10 | E1 | Liquid | 3.0 | - | 0.0030 | 45 | 0.7 | 0.8 | 31.6 |
| Comparative Example 11 | F1 | Liquid | 0.025 | 40 | 0.0030 | 46 | 0.2 | 0.5 | 30.4 |
| Comparative Example 12 | G1 | Liquid | 0.15 | - | 0.0030 | 45 | 0.7 | 1.0 | 23.1 |

Details of the aldehyde scavenger in Table 2 are as follows.
SBH: Sodium borohydride (Wako Pure Chemical Industries, Ltd.)
NaOH: Sodium hydroxide (Wako Pure Chemical Industries, Ltd.)
Diethanolamine (manufactured by NIPPON SHOKUBAI CO., LTD.)
TEDA: Triethylenediamine (manufactured by TOSOH CORPORATION)
BDMAEE: Bis(2-dimethylaminoethyl)ether (TOYOCAT-ETS, manufactured by TOSOH CORPORATION)
N,N,N',N",N"-pentamethyldiethylenetriamine (manufactured by Tokyo Chemical Industry Co., Ltd.)
Dimethylaminoethoxyethanol (manufactured by Tokyo Chemical Industry Co., Ltd.)
Aldehyde scavenger A: A mixture of 98 parts diethanolamine (alkanolamine having two active hydrogen groups and a secondary amino group) and 2 parts SBH
Aldehyde scavenger B: A mixture of 89 parts diethanolamine; 10 parts an aqueous solution in which SBH (12% by mass) and NaOH (40% by mass) were dissolved; and 1 part SBH
Aldehyde scavenger C: A mixture of 90 parts water, 5 parts TEDA, 5 parts BDMAEE, and 0.071 parts SBH
Aldehyde scavenger D: A mixture of 90 parts N,N,N',N",N",N"-pentamethyldiethylenetriamine, 0.1 parts SBH, and 9.9 parts DPG
Aldehyde scavenger E: A mixture of 99 parts dimethylaminoethoxyethanol (an alkanolamine having one active hydrogen group and a tertiary amino group), 0.1 parts SBH, and 0.9 parts water
Aldehyde scavenger F: An aqueous solution in which SBH (12% by mass) and NaOH (40% by mass) were dissolved
Aldehyde scavenger G: An aqueous solution in which SBH (2% by mass) was dissolved
Aldehyde scavenger H: Solid SBH
Aldehyde scavenger A1: The aldehyde scavenger A was left to stand for 14 days in an open system at 25°C and 50% RH
Aldehyde scavenger B1: The aldehyde scavenger B was left to stand under the same conditions as above
Aldehyde scavenger C1: The aldehyde scavenger C was left to stand under the same conditions as above
Aldehyde scavenger D1: The aldehyde scavenger D was left to stand under the same conditions as above
Aldehyde scavenger El: The aldehyde scavenger E was left to stand under the same conditions as above
Aldehyde scavenger F1: The aldehyde scavenger F was left to stand under the same conditions as above
Aldehyde scavenger G1: The aldehyde scavenger G was left to stand under the same conditions as above

### <Measurement method of foam density>

A volume and mass were measured using a test piece that was 10 cm long × 10 cm wide × 7 cm thick by a method according to Japanese Industrial Standard JIS K 6400, and a foam density was calculated (number of samples: n = 2)).

### <Measurement of generation amount of formaldehyde and acetaldehyde>

A generation amount of formaldehyde and acetaldehyde was measured using a test piece that was 10 cm long × 10 cm wide × 7 cm thick by a method according to JASO M902:2007.

### <Moisture-heat resistance durability (WET SET) and wet heat compression set (%)>

Measurement was performed according to Japan Industrial Standard Measured according to JIS K 6400. For the measurement, a core portion of the molded polyurethane foam-molded body was cut out to 50 × 50 × 25 mm, and the cut product was used as a test piece. The test piece was compressed to a thickness of 50%, sandwiched between parallel-plane plates, and left for 22 hours under conditions of 50 °C and 95% RH. The test piece after being left for 22 hours was taken out, and a thickness thereof was measured after 30 minutes. The compression set was measured by comparison of the measured thickness with the value of the thickness before the test, and this compression set was defined as the wet heat compression set.

### <Evaluation Results>

In the aldehyde scavengers A and B used in Examples 1 and 2 (both being the aldehyde scavenger in which SBH was dissolved in the alkanolamine having two active hydrogen groups and the secondary amino group), the effect of reducing aldehydes could be confirmed. In addition, a favorable urethane foam was obtained without deterioration in the physical properties. Furthermore, as is apparent from the results of Examples 3 and 4 that the performance of the aldehyde scavenger did not deteriorate over time. Furthermore, as is apparent from the results of Examples 5 and 6, when the amount of the reducing agent was increased, the effect of reducing aldehydes was further improved. That is, it was confirmed that the aldehyde scavenger of the present invention is excellent in the storage stability and can exhibit the excellent effect of reducing aldehydes without causing deterioration in the physical properties of the polyurethanes.

The aldehyde scavenger C (the aqueous solution containing SBH and the tertiary amine) used in Comparative Example 1 exhibited sufficient performance immediately after the preparation, but was poor in the storage stability. As is apparent from the results of Comparative Example 8, when 14 days passed after the preparation, SBH was inactivated, and therefore the reduction of the aldehydes was not possible.

The aldehyde scavenger D used in Comparative Example 2 has no active hydrogen group and contains many tertiary amines functioning as a catalyst. Therefore, when a large amount of the aldehyde scavenger D was used in order to contain a large amount of SBH for the purpose of the aldehyde reduction, the reaction was too fast, and molding could not be performed.

On the other hand, as is apparent from the result of Comparative Example 3, when the amount used of the aldehyde scavenger D was decreased to the extent that the molding could be performed, the aldehyde could not be effectively reduced. Furthermore, as is apparent from the results of Comparative Example 9, the aldehyde scavenger D was poor in terms of the storage stability, and when 14 days passed after the preparation, SBH was inactivated, and therefore the reduction of the aldehydes was not possible.

The amine compound contained in the aldehyde scavenger E used in Comparative Example 4 contains only one active hydrogen, and deterioration in the physical properties was remarkable when urethane was formed. Furthermore, it is understood based on the result of Comparative Example 10 that SBH was inactivated when 14 days passed after the preparation, which was possibly because of containing water.

As is apparent from the results of Comparative Examples 5 and 11, the aldehyde scavenger F (the aqueous solution of SBH and NaOH) used in Comparative Example 5 was excellent in terms of the storage stability, but deterioration in the physical properties of the polyurethane was remarkable, which was possibly because of containing a large amount of alkali content.

The aldehyde scavenger G used in Comparative Examples 6 and 12 had sufficient initial performance but was inactivated over time.

The solid SBH used in Comparative Example 7 did not dissolve in the polyol, and therefore the effect of reducing aldehydes could not be obtained.

Each configuration and combinations thereof, and the like in each embodiment described above are examples, and additions, omissions, substitutions, and other modifications can be made without departing from the spirit of the present invention.

### [Industrial Applicability]

The aldehyde scavenger for polyurethane according to the present invention can be widely used as an additive for aldehyde reduction in various polyurethane products. The present invention provides the aldehyde scavenger for polyurethanes which is excellent in storage stability and can exhibit excellent effect of reducing aldehydes without causing deterioration in physical properties of polyurethanes.

## Claims

1. An aldehyde scavenger for polyurethanes, wherein a reducing agent is dissolved in an amine compound having two or more active hydrogen groups.

2. The aldehyde scavenger for polyurethanes according to claim 1, wherein the reducing agent is a complex metal hydride.

3. The aldehyde scavenger for polyurethanes according to claim 2, wherein the complex metal hydride is sodium borohydride.

4. The aldehyde scavenger for polyurethanes according to any one of claims 1 to 3, wherein the amine compound having two or more active hydrogen groups is an alkanolamine having a secondary amino group.

5. A polyurethane which is obtained by reacting a polyol composition that contains a polyol, a catalyst, and the aldehyde scavenger for polyurethanes according to any one of claims 1 to 4 with a polyisocyanate.

6. The polyurethane according to claim 5, wherein an amount of the reducing agent contained in the aldehyde scavenger for polyurethanes is from 0.0010 to 0.0100 parts by mass with respect to 100 parts by mass of the polyol in the polyol composition.

7. The polyurethane according to claim 5 or 6, which is a seat pad for vehicles.

8. A method for producing a polyurethane, comprising:
obtaining a polyol composition by mixing a polyol, a catalyst, and the aldehyde scavenger for polyurethanes according to any one of claims 1 to 3; and
reacting the obtained polyol composition with a polyisocyanate.

9. The method for producing a polyurethane according to claim 8, wherein an amount of th reducing agent contained in the aldehyde scavenger for polyurethanes is from 0.0010 to 0.0100 parts by mass with respect to 100 parts by mass of the polyol in the polyol composition.

10. A polyurethane containing:
a polyurethane that contains a constitutional unit derived from an amine compound having two or more active hydrogen groups; and
5 to 100 ppm a boron hydride compound,
in which a generation amount of acetaldehyde measured by a method according to JASO M902:2007 is 0.6 µg/piece or less.

11. The polyurethane according to claim 10, wherein a wet heat compression set measured according to Japanese Industrial Standard JIS K 6400 is 30% or less.
